Europäisches Patentamt

European Patent Office

Office européen des brevets

(11) Numéro de publication: **0 128 845**
**A2**

## (12) DEMANDE DE BREVET EUROPEEN

(21) Numéro de dépôt: 84420100.4

(22) Date de dépôt: 08.06.84

(51) Int. Cl.³: **A 61 G 3/00**

(30) Priorité: 09.06.83 FR 8309941

(71) Demandeur: **Baboulin, René, Avenue Maurice Thorez, F-38220 Vizille (FR)**

(43) Date de publication de la demande: **19.12.84 Bulletin 84/51**

(72) Inventeur: **Baboulin, René, Avenue Maurice Thorez, F-38220 Vizille (FR)**

(74) Mandataire: **Maureau, Pierre et al, Cabinet GERMAIN & MAUREAU B.P. 3011, F-69392 Lyon Cedex 03 (FR)**

(84) Etats contractants désignés: **BE CH DE GB IT LI LU**

(54) Crochet d'amarrage de brancard pour ambulance.

(57) Ce crochet est du type constitué par une pièce coudée (6) portée par une embase (7) mobile dans une glissière (8) fixée sur le plancher de l'ambulance, de manière que la glissière (8) soit orientée longitudinalement et que la branche libre verticale (6a) de la pièce coudée (6) soit engageable, par coulissement, sur un organe (21) du brancard pour en assurer l'amarrage, des moyens de blocage escamotables étant prévus pour s'opposer au déplacement de la pièce coudée (6) dans le sens (17) et d'autres moyens étant prévus pour l'escamotage de la pièce coudée (6).

La pièce coudée ou pièce d'accrochage (6) et son embase (7) forment une seule et même piéce et l'embase (7) présente sur sa face inférieure une gorge longitudinale (12) dont les ailes (8b) supportent, à proximité de leur extrémité antérieure, un axe transversal (14) supportant un cliquet (13) logé dans la gorge (12) et dont la pointe (13a) est normalement maintenue engagée par son propre poids dans une crémaillère (16) ménagée dans le fond de la glissière (8), un jeu ménagé entre le cliquet (13) et le fond (12a) de la gorge (12) permettant son désengagement de la crémaillère (16) par soulèvement vers le haut, tandis que l'axe transversal (14) présente deux prolongements (14a) dont chacun est engagé dans une gorge prévue à cet effet au niveau correspondant de la face interne de l'aile correspondante (8b) de la glissière (8).

1

## "Crochet d'amarrage de brancard pour ambulance"

La présente invention concerne un crochet d'amarrage pour ambulance, du type constitué par une pièce coudée sensiblement en forme de L renversé et porté par une embase mobile dans une glissière ménagée dans une platine destinée à être fixée sur le plancher de l'ambulance, de manière que la glissière soit orientée dans le sens longitudinal et que la branche libre de la pièce en forme de L renversé ou pièce d'accrochage soit engageable, par coulissement dans la glissière, sur un organe du brancard placé sur le plancher de l'ambulance, pour en assurer l'amarrage, des moyens escamotables étant prévus pour s'opposer au déplacement de la pièce d'accrochage dans le sens correspondant à son éloignement de l'organe précité du brancard et d'autres moyens étant prévus pour permettre l'escamotage de la pièce d'accrochage par basculement autour d'un axe horizontal lors de la mise en place et du retrait du brancard.

On connaît un crochet de ce type dans lequel, d'une part, l'axe de pivotement de la pièce d'accrochage est porté par son embase, parallèlement à l'axe longitudinal de la glissière, l'engagement du coulisseau entre deux joues de la glissière assurant l'immobilisation de la pièce d'accrochage en position redressée, et, d'autre part, l'immobilisation du coulisseau dans la glissière dans le sens correspondant à son éloignement du brancard est obtenu par un cliquet porté par ce coulisseau et dont la pointe est engageable dans une crémaillère à dents orientées ménagée dans la glissière, un ressort maintenant normalement le cliquet engagé dans un intervalle entre dents de la crémaillère.

Bien que l'utilisation de ce crochet donne toute satisfaction, il présente l'inconvénient majeur d'être d'un prix de revient élevé en raison de sa complexité, de sa fabrication et de son montage.

La présente invention vise à remédier à cet inconvénient. A cet effet, dans le crochet d'amarrage qu'elle concerne et qui est du type précité, la pièce d'accrochage et son embase forment une seule et même pièce, et l'embase présente une gorge centrale longitudinale lui conférant une section en U renversé dont les ailes supportent, à proximité de leur extrémité antérieure, c'est-à-dire celle vers laquelle est orientée la branche libre de la pièce d'accrochage, un axe transversal sur lequel est articulé un cliquet logé dans la gorge et dont la pointe est normalement maintenue engagée, par son propre poids, dans une crémaillère ménagée dans le fond de la glissière, un jeu ménagé entre le cliquet et le fond de la gorge permettant son désengagement de la crémaillère par soulèvement vers le haut à l'aide d'un prolongement supérieur en talon dont il est pourvu à cet effet, tandis que l'axe transversal précité a une longueur supérieure à la largeur de l'embase, de manière à présenter deux prolongements dont chacun est engagé dans une gorge prévue pour le recevoir, au niveau correspondant de la face interne de l'aile correspondante de la glissière.

Ainsi, pour amarrer un brancard, il suffit de pousser la pièce d'accrochage, en position redressée, en direction du brancard jusqu'à ce que sa branche libre soit engagée sur un organe approprié du brancard, tel qu'une traverse.

En fin de course, l'embase de la pièce d'accrochage est retenue contre tout retour en arrière par son cliquet dont la pointe est engagée dans la crémaillère. Pour libérer le brancard, il suffit de faire pivoter le cliquet vers le haut en agissant sur son talon, ce qui permet de faire reculer l'embase de la pièce d'accrochage dans la glissière jusqu'à ce que son éloignement du brancard soit suffisant pour permettre l'escamotage de la pièce d'accrochage par basculement vers l'avant, autour de l'axe transversal. Il faut noter que le positionnement de cet axe à proximité des extrémités antérieures des ailes de l'embase autorise le basculement de la pièce d'accrochage vers l'avant mais interdit tout basculement vers l'arrière.

Il faut noter en outre que ce crochet ne comporte qu'un seul axe, aucun ressort et aucune joue de maintien vertical de sa pièce d'amarrage.

Suivant une caractéristique intéressante de l'invention, la branche non libre, c'est-à-dire la branche sensiblement verticale de la pièce d'accrochage lorsqu'elle est en position d'utilisation, est constituée de deux éléments agencés de manière à pouvoir coulisser longitudinalement l'un par rapport à l'autre, des moyens étant prévus pour permettre leur immobilisation l'un par rapport à l'autre, à la longueur désirée de cette branche.

Cette disposition permet d'adapter ce crochet à la hauteur de la traverse du brancard utilisé.

Par exemple, l'élément inférieur de la branche non libre de la pièce d'accrochage présente une gorge longitudinale dont le fond porte une vis de blocage et l'élément supérieur de cette branche présente une section transversale lui permettant d'être logé, au moins partiellement, dans cette gorge et une lumière longitudinale traversée par la vis de blocage.

De toute façon, l'invention sera bien comprise à l'aide de la description qui suit en référence au dessin schématique annexé représentant, à titre d'exemple non limitatif, une forme d'exécution de ce crochet :

Figure 1 en est une vue en perspective, en position d'utilisation ;

Figure 2 en est une vue en bout, et

Figure 3 en est une vue en coupe suivant 3/3 de figure 2.

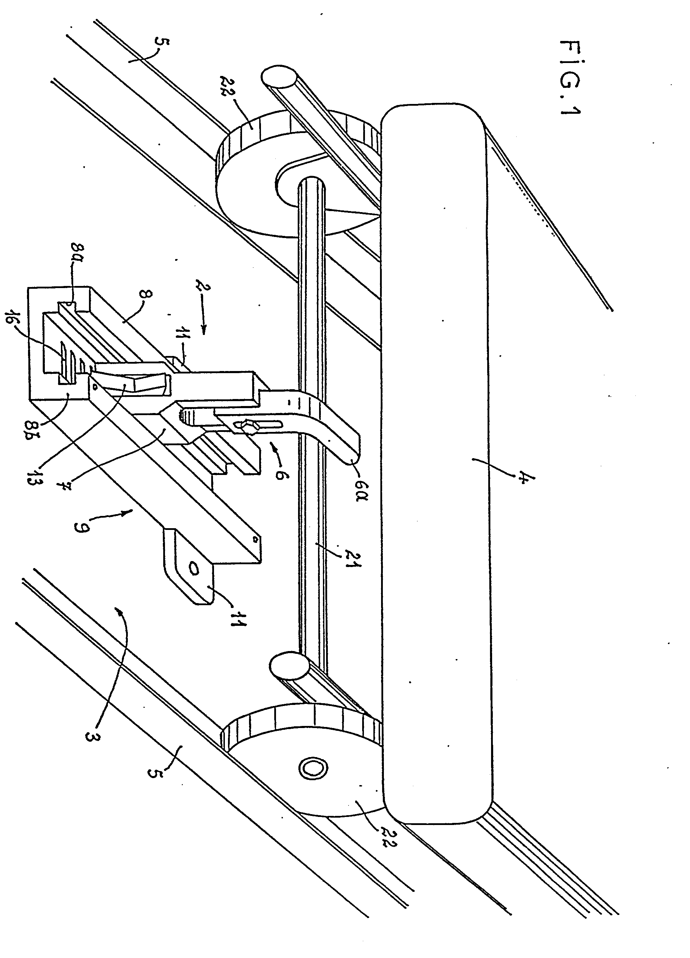

Comme le montre notamment la figure 1, ce crochet (2) est destiné, après avoir été fixé sur le plancher (3) d'une ambulance, à assurer l'amarrage d'un brancard (4) placé sur ce plancher (3) et guidé entre deux cornières (5), elles-mêmes fixées sur le plancher (3).

Ce crochet (2) comprend une pièce coudée (6) en forme de L renversé, munie d'une embase (7) mobile dans une glissière (8) ménagée dans une platine (9), destinée à être fixée sur le plancher (3) de l'ambulance, par exemple au moyen de pattes de fixation (11).

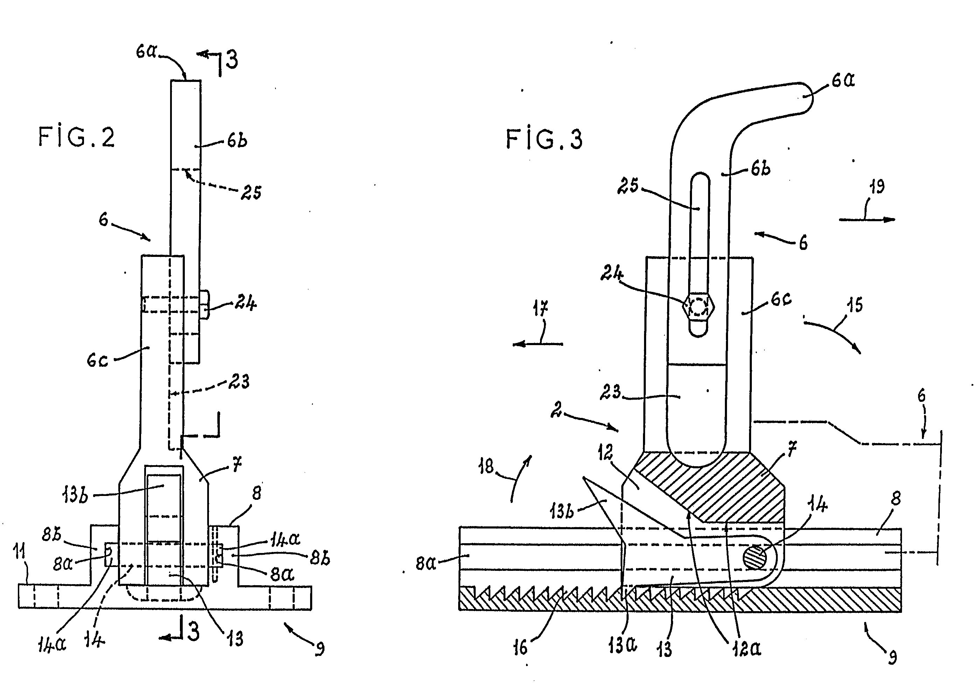

Comme le montre plus particulièrement la figure 3, l'embase (7) du crochet (2) présente une gorge longitudinale (12) ouverte vers le bas, lui conférant une section transversale de forme générale en U renversé, destinée à servir de logement à un cliquet (13). Ce cliquet (13) est articulé sur un axe horizontal (14) porté par les ailes de l'embase (7), à proximité de leur extrémité antérieure, c'est-à-dire celle orientée en direction du brancard (4), ou plus précisément celle de droite sur la figure 3. Par cette position de l'axe (14) et la forme orientée concentriquement par rapport à l'axe (14) des extrémités précitées des ailes de l'embase (7) encadrant la gorge (12), la pièce coudée (6) est susceptible de pivoter vers l'avant, c'est-à-dire dans le sens de la flèche (15), depuis sa position verticale, comme illustrée sur le dessin, mais ne peut pas pivoter dans l'autre sens depuis cette position verticale.

Par ailleurs, le fond de la glissière (8) présente une crémaillère (16) à dents orientées, entre les dents de laquelle la pointe (13a) du cliquet (13) est destinée à être normalement engagée sous l'effet de son propre poids. Cet engagement de la pointe (13a) du cliquet (13)

4

dans un intervalle entre dents de la crémaillère (16) a pour effet d'interdire tout déplacement de la pièce coudée (6) et de son embase (7) dans le sens de la flèche (17), c'est-à-dire dans le sens correspodnant à son recul par rapport au brancard (4).

Enfin, comme le montre notamment la figure 3, il est prévu un jeu important entre le cliquet (13) et le fond (12a) de la gorge (12) autorisant un pivotement du cliquet (13) autour de son axe (14) et dans le sens de la flèche (18), jusqu'au désengagement total de sa dent (13a) d'avec la crémaillère (16).

Lorsque le cliquet (13) est pivoté dans le sens de la flèche (18), ce qui peut être exécuté par action sur son prolongement supérieur ou talon (13b), il est possible de déplacer la pièce coudée (6) et son embase (7) dans la glissière (8), dans le sens de la flèche (17), et par conséquent de dégager le crochet (2) par rapport à un organe prévu à cet effet sur le brancard (4).

Enfin, comme le montre plus particulièrement la figure (2), l'axe (14) d'articulation du cliquet (13) a une longueur supérieure à l'épaisseur de l'embase (7), créant ainsi deux prolongements (14a) logés dans deux gorges (8a) prévues pour les recevoir dans les faces internes des ailes (8b) de la glissière (8), le long desquelles il est susceptible de coulisser.

Il en résulte que l'axe (14) sert non seulement à l'articulation du cliquet (13) mais aussi à celle de la pièce coudée (6) et son embase (7) dans le sens de la flèche (15), comme indiqué précédemment.

Le mode d'utilisation de ce crochet (2) est extrêmement simple à comprendre :

La pièce coudée (6) et son embase (7) étant basculées dans le sens de la flèche (15) jusque dans une position horizontale, partiellement illustrée en traits mixtes sur la figure 3, le brancard (4) est placé sur le plancher (3) entre ses rails de guidage (5) jusqu'en position fin de course.

La pièce coudée (6) et l'embase (7) sont alors relevées en position verticale et pour cela l'axe (14) est placé dans la glissière (8) en un endroit relativement éloigné de l'extrémité tournée vers le brancard (4), c'est-à-dire de l'extrémité de droite sur la figure 3.

Après leur relèvement, la pièce coudée (6) et son embase (7) sont déplacées en direction du brancard (4), c'est-à-dire dans le sens de la flèche (19) jusqu'à ce que l'extrémité libre (6a) de la pièce coudée (6) soit engagée sur un organe prévu à cet effet sur le brancard (4) et qui, dans l'exemple illustré sur la figure 1, est constitué par l'axe (21) des roues (22) de ce brancard.

Il faut noter qu'au cours de ce déplacement de la pièce coudée (6) et de l'embase (7) dans le sens de la flèche (19), le cliquet (13), libre de se soulever en direction du fond (12a) de la gorge (12), ne gêne aucunement ce déplacement.

Lorsque la pièce coudée (6) arrive en butée contre l'axe (21) du brancard (4) et que, par conséquent, le brancard (4) se trouve trouve verrouillé contre le plancher (3) de l'ambulance, le cliquet (13) dont la dent (13a) est tombée naturellement dans un intervalle entre dents de la crémaillère (16), interdit le recul, c'est-à-dire le déplacement dans le sens de la flèche (17), de l'embase (7) et de la pièce coudée (6).

Pour libérer le brancard (4), il suffira de soulever le cliquet (13) en agissant, dans le sens de la flèche (18), sur son talon (13b), ce qu'autorise une légère pression sur l'embase (7) dans le sens de la flèche (19), pour permettre un recul dans le sens de la flèche (17) de la pièce coudée (6) et de son embase (7) sur une course suffisante pour permettre à nouveau l'effacement de la pièce coudée (6) pour basculement dans le sens de la flèche (15), autour de l'axe (14) et autoriser ainsi le retrait du brancard (4).

Comme le montre le dessin, la pièce coudée (6) est constituée de deux éléments, à savoir un élément coudé (6b) et un élément support (6c) solidaire de l'embase (7), ces deux éléments étant susceptibles de coulisser axialement l'un par rapport à l'autre, en vue de permettre d'adapter la hauteur de l'extrémité coudée (6a) à celle de l'axe (21) du brancard (4).

Dans l'exemple illustré sur le dessin, qui montre une forme d'exécution simple de cet agencement, l'élément (6c) présente, sur l'une de ses faces latérales, une gorge longitudinale (23) dont le fond porte une vis de blocage (24) et la branche correspondante de l'élément (6b) présente une section transversale lui permettant d'être logée, au moins partiellement, dans cette gorge (23) et une lumière (25) traversée par la vis de blocage (24) et permettant de régler à la valeur désirée la longueur de la pièce coudée (6).

6

Il faut noter que par rapport aux crochets d'amarrage connus, celui de la présente demande a l'avantage d'être d'une construction plus simple puisqu'il ne comporte qu'un seul axe d'articulation commun pour la pièce coudée et le cliquet et ne nécessite la présence d'aucun ressort de rappel du cliquet en position active. Il en résulte donc manifestement, pour le crochet d'amarrage de l'invention, un prix de revient très avantageux.

Comme il va de soi et comme il ressort de ce qui précède. l'invention ne se limite pas à la seule forme d'exécution décrite ci-dessus à titre d'exemple non limitatif ; elle en embrasse, au contraire, toutes les variantes de réalisation.

## - REVENDICATIONS -

1.- Crochet d'amarrage de brancard pour ambulance, du type constitué par une pièce coudée (6) sensiblement en forme de L renversé et porté par une embase (7) mobile dans une glissière (8) ménagée dans une platine destinée à être fixée sur le plancher (3) de l'ambulance, de manière que la glissière (8) soit orientée dans le sens longitudinal et que la branche libre (6a) de la pièce coudée (6) en forme de L renversé ou pièce d'accrochage soit engageable, par coulissement dans la glissière (8), sur un organe (21) du brancard (4) placé sur le plancher (3) de l'ambulance, pour en assurer l'amarrage, des moyens escamotables étant prévus pour s'opposer au déplacement de la pièce d'accrochage (6) dans le sens (17) correspondant à son éloignement de l'organe (21) du brancard (4) et d'autres moyens étant prévus pour permettre l'escamotage de la pièce d'accrochage (6) par basculement autour d'un axe horizontal lors de la mise en place et du retrait du brancard (4), caractérisé en ce que la pièce d'accrochage (6) et son embase (7) forment une seule et même pièce, et l'embase (7) présente une gorge centrale longitudinale (12) lui conférant une section en U renversé dont les ailes (8b) supportent, à proximité de leur extrémité antérieure, c'est-à-dire celle vers laquelle est orientée la branche libre (6a) de la pièce d'accrochage (6), un axe transversal (14) sur lequel est articulé un cliquet (13) logé dans la gorge (12) et dont la pointe (13a) est normalement maintenue engagée, par son propre poids, dans une crémaillère (16) ménagée dans le fond de la glissière (8), un jeu ménagé entre le cliquet (13) et le fond (12a) de la gorge (12) permettant son désengagement de la crémaillère par soulèvement vers le haut à l'aide d'un prolongement supérieur en talon (13b) dont il est pourvu à cet effet, tandis que l'axe transversal (14) a une longueur supérieure à la largeur de l'embase (7), de manière à présenter deux prolongements (14a) dont chacun est engagé dans une gorge (8a) prévue pour le recevoir, au niveau correspondant de la face interne de l'aile correspondante (8b) de la glissière (8).

2.- Crochet d'amarrage selon la revendication 1, caractérisé en ce que la branche non libre, c'est-à-dire la branche sensiblement verticale de la pièce d'accrochage (6), lorsqu'elle en position d'utilisation, est constituée de deux éléments (6b, 6c) agencés de manière à pouvoir coulisser longitudinalement l'un par rapport à l'autre, à la longueur désirée de cette branche.

3.- Crochet d'amarrage selon la revendication 2, caractérisé en ce que l'élément inférieur (6c) de la branche non libre de la pièce d'accrochage (6) présente une gorge longitudinale (23) dont le fond porte une vis de blocage (24) et l'élément supérieur (6b) de cette branche présente une section transversale lui permettant d'être logé, au moins partiellement, dans cette gorge (23) et une lumière longitudinale (25) traversée par la vis de blocage (24).

Pl. 1/2

FIG.1

0128845

FIG.2

FIG.3